Europäisches Patentamt

European Patent Office

Office européen des brevets

(11) Veröffentlichungsnummer: **0 286 697 B1**

# (12) EUROPÄISCHE PATENTSCHRIFT

(45) Veröffentlichungstag der Patentschrift:
12.09.90

(51) Int. Cl.⁵: **B60D 1/64,** H01R 31/08

(21) Anmeldenummer: 87105400.3

(22) Anmeldetag: **11.04.87**

(54) **Mehrpolige, lösbare Steckverbindung zum Übertragen von elektrischen Strömen, vorzugsweise zur Verwendung an Kraftfahrzeugen.**

(43) Veröffentlichungstag der Anmeldung:
19.10.88 Patentblatt 88/42

(45) Bekanntmachung des Hinweises auf die Patenterteilung:
12.09.90 Patentblatt 90/37

(84) Benannte Vertragsstaaten:
AT BE CH DE ES FR GB GR IT LI NL SE

(56) Entgegenhaltungen:
EP-A- 0 176 677
FR-A- 1 300 710
FR-A- 2 451 118

(73) Patentinhaber: Feder, Emil,
Antonius-Raab-Strasse 1 Industriepark,
D-3500 Kassel(DE)

(72) Erfinder: Feder, Emil,
Antonius-Raab-Strasse 1 Industriepark,
D-3500 Kassel(DE)

(74) Vertreter: Habbel, Hans-Georg, Dipl.-Ing.,
Postfach 3429 Am Kanonengraben 11,
D-4400 Münster(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine mehrpolige, lösbare Steckverbindung zum Übertragen von elektrischen Strömen, vorzugsweise zur Verwendung in Kraftfahrzeugen gemäß dem Oberbegriff der Patentansprüche 1, 5 und 11.

In der EP-A-0 176 677 wird ein Mehrfachverbindungsstecker beschrieben, bei dem mehr als die vorher üblichen sieben Stromkreise zwischen Fahrzeug und Anhänger übertragen werden können, wöbei aber diese Steckverbindung mit den bestehenden Steckverbindungen kompatibel ist.

Größere Fahrzeuge werden jedoch mit 24 Volt Stromspannung betrieben, wobei auch 7polige Steckverbindungen vorgesehen sind. Im Gegensatz zu den Steckverbindungen für 6 bzw. 12 Volt, die einen festen Kontakteinsatz mit Stiften und Hülsen aufweisen, weist die 24-Volt-Ausführung in dem Stecker, der in diesem Einsatzfall auch "Steckdose" genannt wird, sieben freistehende Kontaktstifte auf, von denen einer zwecks Verdrehsicherung gegenüber den restlichen Stiften im Durchmesser dicker ist. Dementsprechend hat die Steckdose der 24-Volt-Ausführung - dort auch "Stecker" genannt - vorne eine feste Abschlußwand, in die sieben Kontakthülsen spiegelbildlich zum Stecker eingelassen sind, während bei der 6 bzw. 12-Volt-Ausführung die Stifte und Hülsen frei vorstehen.

Eine weitere Besonderheit der 24-Volt-Anlage besteht darin, daß sich sowohl am Motorwagen als auch am Trailer jeweils ein Stecker befindet, die bei Bedarf durch ein Kabel mit je einer Steckdose an den Enden verbunden werden.

Auch für Fahrzeuge mit 24-Volt-Ausrüstung gilt die Notwendigkeit zusätzlicher Verbindungen zwischen Zugfahrzeug und Anhänger. Dies wird z. Zt. dadurch gelöst, daß ein besonderer zweiter Stecker installiert wird, der sich zum ersten Stecker durch technische und konstruktive Merkmale unterscheidet, um Verwechselungen zu vermeiden. Diese Verbindungen sind bekannt unter der Bezeichnung "24 N" für die standardmäßige und "24 S" für die zusätzliche Verbindung.

Bei dieser bekannten Ausführung sind zwei getrennte Stecker und zwei getrennte Verbindungskabel mit je zwei verschiedenen Steckverbindungen erforderlich.

Der Erfindung liegt die Aufgabe zugrunde, den Stecker und die Steckdose für 24-Volt-Anlagen so auszubilden, daß sie zu den bisher vorhandenen sieben Polen weitere zusätzliche Pole aufweisen, aber mit den herkömmlichen Verbindungen problemlos kompatibel sind.

Diese der Erfindung zugrundeliegende Aufgabe wird durch die Lehre der Hauptanspruches gelöst.

Eine zweite Lösungsmöglichkeit dieser Aufgabe wird im Anspruch 5 vorgeschlagen.

Vorteilhafte Ausgestaltungen sind jeweils in den zugehörigen Unteransprüchen erläutert.

Ausführungsbeispiele der Erfindung werden nachfolgend anhand der Zeichnungen beschrieben. Die Zeichnungen zeigen dabei in

Fig. 1 schaubildlich einen Stecker, in
Fig. 2 schaubildlich eine zugehörige Steckdose, in
Fig. 3 die Steckdose gemäß Fig. 2 in einem anderen Arbeitszustand, in
Fig. 4 eine abgeänderte Ausführungsform des Steckers gemäß Fig. 1, in Fig. 5 eine abgeänderte Ausführungsform der Steckdose zur Verwendung in Verbindung mit dem Stecker gemäß Fig. 4.

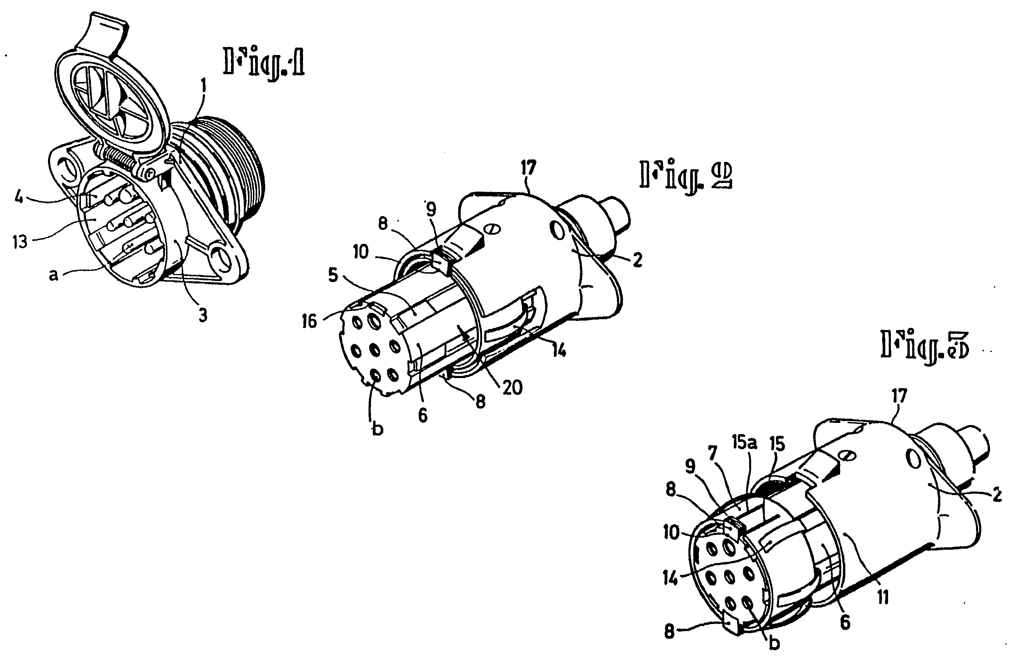

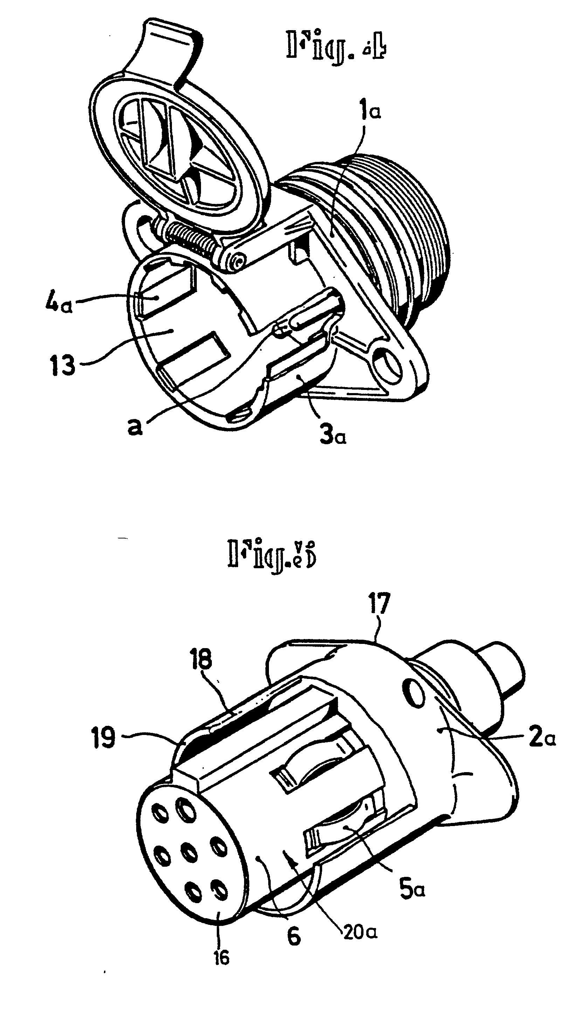

In den Fig. 1 bis 3 ist ein Stecker 1 dargestellt, der einen Steckerabschlußring 3 aufweist, wobei auf der Innenseite 13 dieses Steckerabschlußringes 3 zusätzliche Kontaktpole 4 angeordnet sind, derart, daß sie mit der Kontur der Innenseite 13 abschließen oder sogar gegenüber dieser Innenseite 13 zurückversetzt sind. Mit a sind in Fig. 1 die Stifte des Steckers bezeichnet.

Dadurch, daß die zusätzlichen Kontaktpole 4 gegenüber der Innenseite 13 zurückversetzt sind, wird erreicht, daß herkömmliche Steckdosen problemlos in den erfindungsgemäßen Stecker 1 eingeführt werden können, ohne mit den zusätzlichen Kontaktpolen 4 in Berührung zu kommen. Somit ist sichergestellt, daß eine herkömmliche Steckdose zum erfindungsgemäßen Stecker 1 mit mehr als sieben Polen kompatibel ist.

Eine erfindungsgemäße Steckdose ist in Fig. 2 mit 2 bezeichnet und weist einen Steckdoseneinsatz 20 auf, der auf seiner Außenseite 6 in spiegelbildlicher Anordnung und entsprechender Ausführung entsprechende Kontaktpole 5 aufweist, die mit den Kontaktpolen 4 des Steckers 1 zusammenwirken und den Strom übertragen können. Es ist somit eine funktionsfähige, mehr als sieben Pole aufweisende Steckverbindung herstellbar.

Um zu verhindern, daß die zusätzlichen Pole 5 frei und erhaben auf der Außenseite des Steckdoseneinsatzes 20 liegen müssen, um mit den zurückversetzten Kontaktpolen 4 des Steckers in entsprechenden Kontakt zu kommen, wird vorgeschlagen, daß die Kontaktpole 5 ebenfalls von der Außenseite des Steckdoseneinsatzes 20 zurückversetzt ausgebildet sind. Diese Anordnung hat den Vorteil, daß eine stromführende Steckdose 2 problemlos in einen herkömmlichen Stecker gesteckt werden kann, ohne Kurzschluß zu erzeugen.

Wenn die Kontaktpole 5 erhaben auf dem Steckdoseneinsatz 20 angeordnet sind, bewirkt dies folgendes:

Wenn eine erfindungsgemäße Steckdose 2 in einen herkömmlichen Stecker gesteckt wird, so zeigt dies keinerlei Auswirkungen, da der herkömmliche Stecker ja keine zusätzlichen stromführenden Kontakte aufweist und somit die zusätzlichen Kontaktpole 5 der Steckdose 2 neutral in dem Steckerabschlußring aufgenommen würden. Die am gegenüberliegenden Ende des Kabels befindliche Steckdose 2 ist, wenn es sich um eine erfindungsgemäße Steckdose handelt, an ihren zusätzlichen Kontakten dann ebenfalls stromlos. Wird jedoch umgekehrt eine erfindungsgemäße Steckdose 2 in einen stromführenden erfindungsgemäßen Stecker 1 eingesteckt, so sind die stromführenden zusätzlichen Kontaktpole 5 der am anderen Ende des Verbindungskabels befindlichen Steckdose 2 nicht isoliert und diese Steckdose kann deshalb nicht in einen herkömmlichen Stecker aus Metall gesteckt werden, ohne einen Kurzschluß hervorzurufen. Dies würde nicht den Sicherheitsvorschriften entsprechen.

Um eine Brücke zwischen dem zurückgesetzten Kontaktpol 4 des Steckers 1 und dem zurückgesetzten Kontaktpol 5 der Steckdose 2 herstellen zu können, ist ein weiteres Bindeglied notwendig. Hierfür wird in den Fig. 1 bis 3 ein Kontaktring 7 vorgeschlagen, der entsprechend dimensionierte Kontaktstücke 14 trägt, und zwar in solcher Anordnung und solcher Zahl, daß sie mit den Kontaktpolen 4 und den Kontaktpolen 5 eine elektrische Verbindung herstellen können. Der Kontaktring 7 mit den Kontaktstücken 14 ist in seiner Längsrichtung beweglich auf dem Steckdoseneinsatz 20 angebracht, wobei die Kontaktstücke 14 in den Nuten gleiten, die durch die zurückversetzten Kontaktpole 5 entstanden sind.

Zwischen den Kontaktstücken 14 befinden sich am Kontaktring 7 eine oder mehrere federnde Zungen 8, die aus dem Kontaktring 7 durch Längsschlitze 15 und 15a erzeugt werden. Diese federnden Zungen 8 sind an ihrer Vorderseite jeweils nach oben und unten mit Nocken 9 und 10 versehen, wobei der Nocken 9 als Griffstück zum Bewegen des Kontaktringes 7 in seiner Längsrichtung dient, während der Nocken 10, der nach unten gerichtet ist, als Raste gegen unbeabsichtigtes Zurückschieben vor die Vorderkante 16 des Steckdoseneinsatzes 20 greift.

Vom rückwärtigen Ende 17 der Steckdose 2 her ist eine Hülse 11 vorgesehen, die den Kontaktring 7 in seiner hinteren Stellung umschließt, vollständig aufnimmt und nach außen isoliert.

Wird nun eine erfindungsgemäße Steckdose 2 in einen herkömmlichen Stecker eingeführt, so ist es möglich, den Kontaktring 7 in seine rückwärtige Stellung (s. Fig. 2) zu verbringen, wo er neutral untergebracht ist. Da die Kontaktpole 5 der Steckdose 2 und die Kontaktpole 4 des Steckers 1 zurückversetzt angeordnet sind, entsteht dann keine Stromübertragung. Soll aber die Steckdose 2 in einen erfindungsgemäßen Stecker 1 eingeführt werden, so wird der Kontaktring 7 in seine vordere Stellung verbracht, wo er mit dem unteren Nocken 10 vor der Vorderkante 16 des Steckdoseneinsatzes 20 einrastet und als Vermittler zwischen dem Kontaktpol 4 des Steckers und dem Kontaktpol 5 des Steckdoseneinsatzes 20 funktioniert.

Eine abgeänderte Ausführungsform ist in den Fig. 4 und 5 dargestellt.

Auch hier ist der Stecker 1a und eine Steckdose 2a so aufgebaut, daß beide Bauteile mit den herkömmlichen Steckverbindungen beliebig kompatibel sind, ohne aber zusätzliche bewegliche Bindeglieder zu benötigen.

Dazu wird zunächst der Steckerabschlußring 3a um ein ausreichendes Maß, vorzugsweise 2/3 bis 1/1 der Länge der Stifte a verlängert, so daß sie um das entsprechende Maß zusätzlich über die vorhandenen Stifte a hinaus vorsteht. Auf der Innenseite des Steckerabschlußringes 3a werden die zusätzlichen Kontaktpole 4a zur Innenseite 13 versenkt angebracht, jedoch über die Länge der vorhandenen Stifte a hinaus bis kurz vor das Ende des Steckerabschlußringes 3a vorgesehen. Durch die versenkte Anordnung der Kontaktpole 4a ist gewährleistet, daß herkömmliche Steckdosen problemlos mit den vorhandenen Stiften verbunden werden können, ohne mit den Kontaktpolen 4a auf der Innenseite 13 des Steckerabschlußringes 3a in Berührung zu kommen. Bedingt durch die Konstruktion der herkömmlichen Steckdosen, wirkt sich die Verlängerung des Steckerabschlußringes 3a auch nicht negativ auf die Verwendung dieser herkömmlichen Steckdosen aus.

Die Steckdose 2a gemäß Fig. 5 erhält ebenfalls auf der Außenseite 6 eines Steckdoseneinsatzes 20a zusätzliche Kontaktpole 5a, aber um die entsprechende Länge von der Vorderkante 16 zurückverlegt, um die der Steckerabschlußring 3a nach vorne verlängert ist. Dadurch ist gewährleistet, daß eine elektrische Stromübertragung zwischen den zusätzlichen Kontaktpolen 4a und 5a von Stecker und Steckdose nur dann erfolgt, wenn es sich in beiden Fällen um die erfindungsgemäße Ausbildungsform handelt. Falls eine erfindungsgemäße, stromführende Steckdose 2a in einen Stecker herkömmlicher Art gesteckt wird, kann keine Stromübertragung erfolgen, weil einerseits die entsprechenden zusätzlichen Kontakte 5a in der Längsrichtung der Steckdose 2a zurückversetzt sind und andererseits der Steckerabschlußring 3a eines herkömmlichen Steckers kürzer ist und nicht an die zusätzlichen Kontakte 5a der Steckdose 2a heranreicht und somit die Kontakte 5a mit dem Steckerabschlußring der herkömmlichen Dose keine Berührung haben können.

Um die zusätzlichen Kontakte 5a der Steckdose 2a nach außen hin zu isolieren, wird eine entsprechende Schutzhülse 18 vorgesehen, deren Innendurchmesser größer ist als der Außendurchmesser des Steckerabschlußringes 3a des Steckers. Dabei kann in einem bevorzugten Ausführungsbeispiel in der Nähe einer Vorderkante 19 innerhalb oder außerhalb der Schutzhülse 18 ein umlaufendes Dichtelement angebracht sein.

Die Schutzhülse 18 schiebt sich im eingesteckten Zustand über den Steckerabschlußring 3a des Steckers 1a und dient einerseits der erhöhten Festigkeit und andererseits der zuverlässigen Abdichtung, da die beiden ineinandergesteckten Bauteile ähnlich einer Labyrinthdichtung wirken.

**Patentansprüche**

1. Mehrpolige, lösbare Steckverbindung zum Übertragen von elektrischen Strömen, vorzugsweise zur Verwendung an Kraftfahrzeugen mit einem Stecker (1) und einer Steckdose (2), die zusammenwirkende Stifte (a) und Buchsen (b) aufweisen, wobei die Buchsen (b) auf einem Steckdoseneinsatz (20) angeordnet sind, der von einem Steckerabschlußring (3) übergreifbar ist, in dessen Innenraum die Stifte (a) des Steckers vorgesehen sind und weitere Kontaktpole (4) auf der Innenseite des Steckerabschlußringes (3) und weitere Kontaktpole (5) auf der Außenseite des Steckdoseneinsatzes (20) angeordnet sind, dadurch gekennzeichnet, daß die weiteren Kontaktpole (4, 5) des Steckers (1) und der Steckdose (2) gegenüber der Oberfläche der Innenseite des Steckerabschlußringes (3) und der Außenseite (6) des sie tragenden Steckdoseneinsatzes (20) radial zurückversetzt angeordnet sind und ein Kontaktring (7) auf dem Steckdoseneinsatz (20) in dessen Längsachse aus einer unwirksamen, zurückgeschobenen Stellung in eine wirksame vordere Stellung verschiebbar ist, wobei der Kontaktring (7) an seiner inneren und äußeren Oberfläche über diese vorstehende Kontaktstücke (14) trägt, die mit den zurückversetzten Kontaktpolen (4, 5) in der vorderen Stellung des Kontaktringes (7) in Verbindung kommen.

2. Mehrfachverbindungsstecker nach Anspruch 1, dadurch gekennzeichnet, daß der Kontaktring (7) am Steckdoseneinsatz (20) befestigt ist.

3. Mehrfachverbindungsstecker nach Anspruch 1 und 2, dadurch gekennzeichnet, daß die Steckdose (2) eine Hülse (11) aufweist, die den Kontaktring (7) aufnimmt und umschließt.

4. Mehrfachverbindungsstecker nach Anspruch 1 bis 3, dadurch gekennzeichnet, daß der Kontaktring (7) eine oder mehrere federnde Zungen (8) aufweist, an denen Nocken (9, 10) angebracht sind, von denen der Nocken (9) als Betätigungsgriff für den Kontaktring (7) und der Nocken (10) als Arretierung für den Kontaktring (7) in der vorderen Stellung dient.

5. Mehrpolige, lösbare Steckverbindung zum Übertragen von elektrischen Strömen, vorzugsweise zur Verwendung an Kraftfahrzeugen mit einem Stecker (1a) und einer Steckdose (2a), die zusammenwirkende Stifte (a) und Buchsen (b) aufweisen, wobei die Buchsen (b) auf einem Steckdoseneinsatz (20a) angeordnet sind, der von einem Steckerabschlußring (3a) übergreifbar ist, in dessen Innenraum die Stifte (a) des Steckers vorgesehen sind und weitere Kontaktpole (4a) auf der Innenseite des Steckerabschlußringes (3a) und weitere Kontaktpole (5a) auf der Außenseite des Steckdoseneinsatzes (20a) angeordnet sind, dadurch gekennzeichnet, daß der Steckerabschlußring (3a) nach vorn über die herkömmlichen Kontaktstifte (a) verlängert ist, wobei die zusätzlichen Kontaktpole (4a) in der Verlängerung angeordnet sind und die auf der Außenseite (6) des Steckdoseneinsatzes (20a) angeordneten Kontaktpole (5a) proportional zur Verlängerung des Steckerabschlußringes (3a) in Längserstreckung des Steckdoseneinsatzes (20a) gegenüber der Vorderkante (16) des Steckdoseneinsatzes (20a) axial zurückversetzt sind und so dimensioniert sind, daß sie mit den Kontaktpolen (4a) des Steckerabschlußringes (3a) in Kontakt bringbar sind.

6. Mehrfachverbindungsstecker nach Anspruch 5, dadurch gekennzeichnet, daß die Kontaktpole (5a) federnd in Durchbrüchen des Steckdoseneinsatzes (20a) gelagert sind und über die Oberfläche des Steckdoseneinsatzes (20a) vorstehen.

7. Mehrfachverbindungsstecker nach Anspruch 5 und 6, dadurch gekennzeichnet, daß die Kontaktpole (5a) des Steckdoseneinsatzes (20a) von einer Schutzhülse (18) abgedeckt sind.

8. Mehrfachverbindungsstecker nach Anspruch 5 bis 7, dadurch gekennzeichnet, daß der Innendurchmesser der Schutzhülse (18) größer als der Außendurchmesser des Steckerabschlußringes (3a) ist.

9. Mehrfachverbindungsstecker nach einem oder mehreren der Ansprüche 5 bis 8, dadurch gekennzeichnet, daß innerhalb der Schutzhülse (18) ein Dichtungselement angeordnet ist.

10. Mehrfachverbindungsstecker nach einem oder mehreren der vorhergehenden Ansprüche 5 bis 9, dadurch gekennzeichnet, daß die Länge der Schutzhülse (18) so bemessen ist, daß die Kontakpole (5a) von ihr abgedeckt sind und sie bei Einstecken in einen herkömmlichen Stecker den dort vorhandenen Steckerabschlußring.

**Claims**

1. Disconnectable multipole plug-in connection for the transfer of electrical currents, preferably for use in motor vehicles, having a plug (1) and a socket (2) which comprise co-operating pins (a) and bushings (b), the bushings (b) being arranged on a socket insert (20) over which there is adapted to extend a plug end ring (3), in the inside space of which the pins (a) of the plug are provided and further contact poles (4) are arranged on the inside of the plug end ring (3) and further contact poles (5) on the outside of the socket insert (20), characterised in that the further contact poles (4, 5) of the plug (1) and of the socket (2) are situated set back radially relatively to the surface of the inside of the plug end ring (3) and of the outside (6) of the socket insert (20) carrying them, and a contact ring (7) is displaceable on the socket insert (20) on the longitudinal axis thereof from an inoperative retracted position into an operative forward position, the contact ring (7) comprising at its inner and outer surface contact pieces (14) which project thereabove and which come into contact with the set-back contact poles (4, 5) in the forward position of the contact ring (7).

2. Multiple connection plug according to claim 1, characterised in that the contact ring (7) is secured to the socket insert (20).

3. Multiple connection plug according to claims 1 and 2, characterised in that the socket (2) has a sleeve (11) which accommodates and surrounds the contact ring (7).

4. Multiple connection plug according to claims 1 to 3, characterised in that the contact ring (7) has one or more elastic tongues (8) on which projections (9, 10) are arranged whereof the projection (9) serves as an operating grip for the contact ring (7) and the projection (10) as a means for arresting the contact ring (7) in the forward position.

5. Disconnectable multipole plug-in connection for the transfer of electrical currents, preferably for use in motor vehicles, having a plug (1a) and a socket (2a) which comprise co-operating pins (a) and bushings (b), the bushings (b) being arranged on a socket insert (20a) over which there is adapted to extend a plug end ring (3a), in the inside space of which the pins (a) of the plug are provided and further contact poles (4a) are arranged on the inside of the plug end ring (3a) and further contact poles (5a) on the outside of the socket insert (20a), characterised in that the plug end ring (3a) is prolonged forwardly over the conventional contact pins (a), the additional contact poles (4a) being arranged in the prolongation, and the contact poles (5a) which are arranged on the outside (6) of the socket insert (20a) are set back axially relatively to the front edge (16) of the socket insert (20a) proportionally to the prolongation of the plug end ring (3a) in the longitudinal extent of the socket insert (20a), and are so dimensioned that they can be brought into contact with the contact poles (4a) of the plug end ring (3a).

6. Multiple connection plug according to claim 5, characterised in that the contact poles (5a) are mounted elastically in apartures of the socket insert (20a) and project above the surface of the socket insert (20a).

7. Multiple connection plug according to claims 5 and 6, characterised in that the contact poles (5a) of the socket insert (20a) are covered by a protective sleeve (18).

8. Multiple connection plug according to claims 5 to 7, characterised in that the inner diameter of the protective sleeve (18) is greater than the outer diameter of the plug end ring (3a).

9. Multiple connection plug according to one or more of claims 5 to 8, characterised in that a sealing element is arranged within the protective sleeve (18).

10. Multiple connection plug according to one or more of the preceding claims 5 to 9, characterised in that the length of the protective sleeve (18) is so dimensioned that the contact poles (5a) are covered thereby, and, on insertion into a conventional plug, said sleeve extends over the plug end ring provided thereat.

## Revendications

1. Prise à broches multipolaire pour transmettre des courants électriques, de préférence destinée à être utilisée sur des véhicules automobiles, comprenant une fiche (1) et un socle (2) qui présentent des broches mâles (a) et des broches femelles (b) coopérant entre elles, les broches femelles (b) étant montées sur un noyau de socle (20) qui peut être encerclé par une bague terminale de fiche (3) dans le volume intérieur de laquelle sont prévues les broches mâles (a) de la fiche, et des pôles de contact additionnels (4) sur la face intérieure de la bague terminale (3) de la fiche, ainsi que des pôles de contact additionnels (5) prévus sur la face extérieure du noyau (20) du socle, caractérisée par le fait que les pôles de contact additionnels (4, 5) de la fiche (1) et du socle (2) sont disposés en retrait radialement par rapport à la surface de la face intérieure de la bague terminale (3) de la fiche et à la face extérieure (6) du noyau (20) du socle qui les porte, et une bague de contact (7) prévue sur le noyau de socle (20) peut se déplacer en translation parallèlement à son axe longitudinal, pour passer d'une position inactive en retrait, à une position active avancée, la bague de contact (7) portant sur sa surface intérieure et sur sa surface extérieure des pièces de contact (14) qui font saillie sur ces surfaces et qui entrent en liaison avec les pôles de contact (4, 5) disposés en retrait, dans la position avancée de la bague de contact (7).

2. Prise multipolaire selon la revendication 1, caractérisée par le fait que la bague de contact (7) est fixée au noyau (20) du socle.

3. Prise multipolaire selon la revendication 1 ou 2, caractérisée par le fait que le socle (2) présente un manchon (11) qui reçoit et entoure la bague de contact (7).

4. Prise multipolaire selon l'une des revendications 1 à 3, caractérisée par le fait que la bague de contact (7) présente une ou plusieurs languettes élastiques (8) sur lesquelles sont disposées des cames (9, 10), dont la came (9) sert de poignée d'actionnement pour la bague de contact (7) et la came (10) sert d'arrêt pour arrêter la bague de contact (7) dans la position avancée.

5. Prise démontable multipolaire pour la transmission de courants électriques, destinée de préférence à être utilisée sur des véhicules automobiles, comprenant une fiche (1a) et un socle (2a), qui présentent des broches mâles (a) et des broches femelles (b) coopérant entre elles, les broches femelles (b) étant montées sur un noyau de socle (20a) qui peut être entouré par une bague terminale de fiche (3a) dans le volume intérieur de laquelle sont disposées les broches mâles (a) de la fiche, ainsi que des contacts polaires additionnels (4a) prévus sur la face intérieure de la bague terminale (3a) de la fiche et des pôles de contact additionnels (5a) prévus sur la face extérieure du noyau (20a) du socle, caractérisée par le fait que la bague terminale (3a) de la fiche est prolongée vers l'avant au-delà des broches mâles de contact traditionnelles (a), les pôles de contact additionnels (4a) étant disposés dans le prolongement, et les pôles de contact (5a) disposés sur la face extérieure (6) du noyau (20a) du socle étant disposés en retrait axial par rapport au bord avant (16) du noyau (20a) du socle d'une distance proportionnelle au prolongement de la bague terminale (3a) de la fiche dans la direction longitudinale du noyau (20a) du socle, et étant dimensionnés de manière à pouvoir être mis en contact avec les pôles de contact (4a) de la bague terminale (3a) de la fiche.

6. Prise multipolaire selon la revendication 5, caractérisée par le fait que les pôles de contact (5a) sont montés élastiquement dans des évidements du noyau (20a) du socle et font saillie au-delà de la surface du noyau (20a) du socle.

7. Prise multipolaire selon l'une des revendications 5 et 6, caractérisée par le fait que les pôles de contact (5a) du noyau (20a) du socle sont recouverts d'un manchon protecteur (18).

8. Prise multipolaire selon l'une des revendications 5 à 7, caractérisée par le fait que le diamètre intérieur du manchon protecteur (18) est plus grand que le diamètre extérieur de la bague terminale (3a) de la fiche.

9. Prise multipolaire selon une ou plusieurs des revendications 5 à 8, caractérisée en ce qu'un élément d'étanchéité est disposé à l'intérieur du manchon protecteur (18).

10. Prise multipolaire selon une ou plusieurs des revendications précédentes 5 à 9, caractérisée par le fait que la longueur du manchon protecteur (18) est calculée de manière que les pôles de contact (5a) soient recouverts par ce manchon et que, lors de l'embrochage dans une fiche traditionnelle, il recouvre la bague terminale de la fiche présente sur cette fiche.

Fig. 1

1

4

13

a

3

Fig. 2

17

8    9

10

5

16

b

6

8

20

14

2

Fig. 3

15a  15

9    7

8

10

14

8

b

6

11

17

2

EP 0 286 697 B1

Fig. 4

1a

4a

13

a

3a

Fig. 5

17

18

19

2a

5a

6

20a

16